# EUROPEAN PATENT SPECIFICATION

(11) **EP 0 592 732 B1**
(45) Date of publication and mention of the grant of the patent: **27.12.1995**
(21) Application number: 92309164.9
(22) Date of filing: 08.10.1992
(51) Int. Cl.: F16L 11/04, F16L 9/12

(54) **Liquid transfer tube**
Rohr zum Befördern einer Flüssigkeit
Tuyau de transport d'un liquide

(43) Date of publication of application: 20.04.1994
(73) Proprietor: NITTA MOORE COMPANY, Osaka (JP)
(72) Inventor: Nishino, Todomu, c/o Nabari Factory of Nitta Moore, Nabari-shi, Mie-ken (JP)
(74) Representative: Linn, Samuel Jonathan

(56) References cited:
- DE-A- 2 125 575
- DE-C- 4 001 125
- FR-A- 1 538 159
- US-A- 3 561 493
- US-A- 4 800 109

## Description

The present invention relates to a tube for transferring alcohol or gasoline or a mixture thereof (hereinafter referred to as a fuel transfer tube).

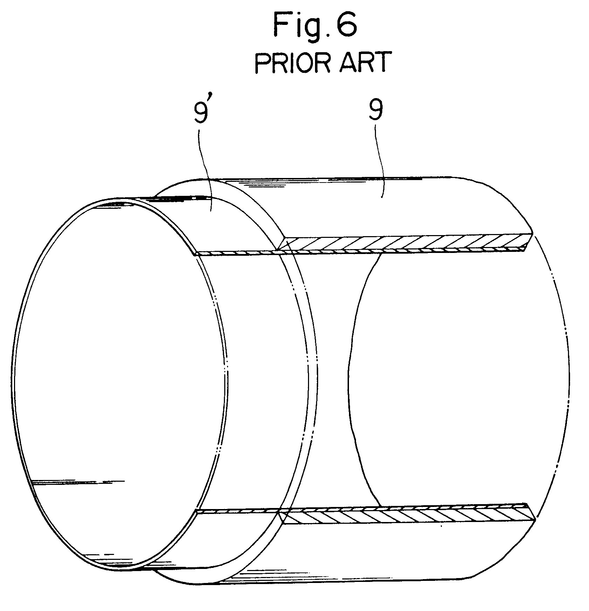

A tube for transferring alcoholic media, for example, as shown in Fig. 6, is already known. This tube is composed of a polyamide layer 9 and a polyolefin layer 9' disposed inside thereof.

This type of tube is used for transferring media in an automotive brake system. Such media contain alcohol for an antifreeze purposes. The presence of the polyolefin layer confers alcohol resistance and impermeability and ensures the safety of the brake system as compared with conventional tubes made of polyamide alone. Another example of such a tube is shown in DE-A-2 125 575.

However, tests done on this type of tube in respect of transferring alcohol or gasoline alone, such as a gasoline permeability test and a moisture permeability test, shown below, provided that the gasoline resistance of the tube was not favourable. These test methods and results are shown below.

The tube used in the tests measured 8mm in outside diameter and 6mm in inside diameter, and the polyamide layer 9 of the tube was 0.9mm in thickness and the polyolefin layer 9' thereof was 0.1mm in thickness.

### Test methods

### 1. Gasoline permeability test

A strip of 200mm of the tube (outside diameter 8mm, inside diameter 6mm) was filled with gasoline and left to stand in a 50°C oven for five days, and the weight loss thereof was measured.

### 2. Moisture permeability test

A strip of the tube was filled with a moisture adsorbent (molecular sieve), and left to stand in a thermostatic oven controlled at 40°C and 95% RH, and the weight gain of the moisture adsorbent was measured.

### 3. Flexibility test

The end of a 400mm-long strip of the tube was held, the load required for bending it 180 degrees around a semicircle of 100mm in radius was measured.

### 4. Length change test by alcohol absorption

A strip of 200mm of the tube was filled with methyl alcohol and left to stand for seven days at 20°C, and the length change was measured.

### Test Results

**Table 1**

| Layer composition | | Impermeability | | Alcohol Resistance | Flexibility |
|---|---|---|---|---|---|
| Inside → Outside | | Gasoline | Water | | |
| Polyolefin Layer 9' | Polyamide Layer 9 | △ | ○ | Ⓞ | ○ |

The symbols used in Table 1, Ⓞ, ○, △, X denote as follows in Table 2.

**Table 2**

| Judgement | Gasoline permeability | Moisture permeability | Alcohol Resistance | Flexibility |
|---|---|---|---|---|
| Ⓞ | 10mg or less | 9mg/m/day or less | 0 mm | 500g or less |
| ○ | 10 ∼ 50mg | 10 ∼ 29 | 3mm or less | 500 ∼ 800g |
| △ | 100mg or more | 30 ∼ 99 | 4 ∼ 7mm | 800g or more |
| X | - | 100 or more | 8mm or more | - |

From Tables 1 and 2, the tube used in the test was found to be highly effective in alcohol resistance, but not in gasoline impermeability.

It is an object of the present invention to provide a flexible tube which can be used reliably for transferring alcohol, gasoline or a mixture thereof.

A transfer tube of the present invention comprises a layer of polyamide resin layer containing metaxylene group, said layer being 0.3mm or less in thickness, and a layer of polyolefin resin. Such a tube is preferably formed by simultaneous extrusion of the respective layers.

Although the layer of polyamide resin containing metaxylene group is only 0.3mm or less in thickness, the permeation of gasoline is reduced to a very low level as compared with a tube having a conventional polyamide resin layer. The alcohol resistance of the tube is maintained high by the polyolefin resin layer.

Moreover, since the layer of polyamide resin containing metaxylene group is 0.3mm or less in thickness, the flexibility which is essential to this type of tube is also ensured.

The invention will be described further, by way of example, by reference to the embodiments shown in the accompanying drawings, in which:
Fig. 1 is a sectional perspective view of a first embodiment of a fuel transfer tube of the present invention;
Fig. 2 is a sectional perspective view of a second embodiment of a fuel transfer tube of the invention;
Fig. 3 is a sectional perspective view of a third embodiment of a fuel transfer tube of the invention;
Fig. 4 is a sectional perspective view of a fourth embodiment of a fuel transfer tube of the invention;
Fig. 5 is a sectional perspective view of a fifth embodiment of a fuel transfer tube of the invention; and
Fig. 6 is a sectional perspective view of a conventional tube.

### Embodiment 1

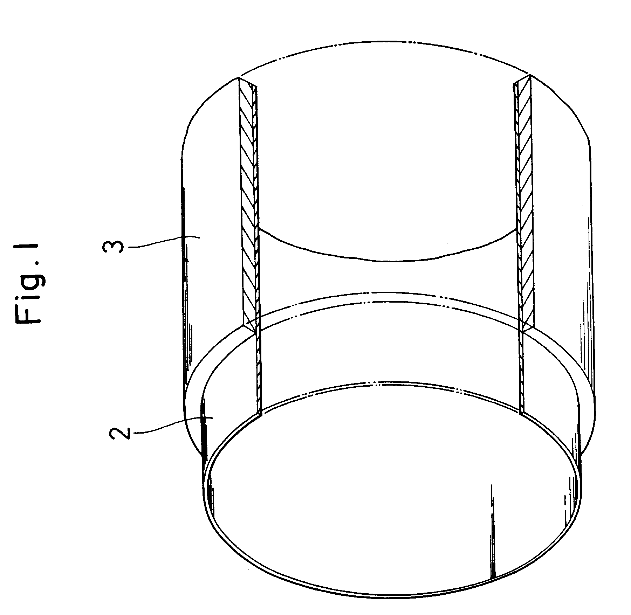

This embodiment is composed of two layers as shown in Fig. 1. The layers consist of an inner layer 2 of polyamide resin containing metaxylene group (hereinafter referred to as MX nylon layer 2) and an outer layer 3 of polyolefin resin (hereinafter referred to as PO layer 3). The MX nylon layer 2 and the PO layer 3 are respectively 0.2mm and 0.8mm in thickness. The laminated tube as a whole is 8mm in outside diameter and 6mm in inside diameter.

### Embodiment 2

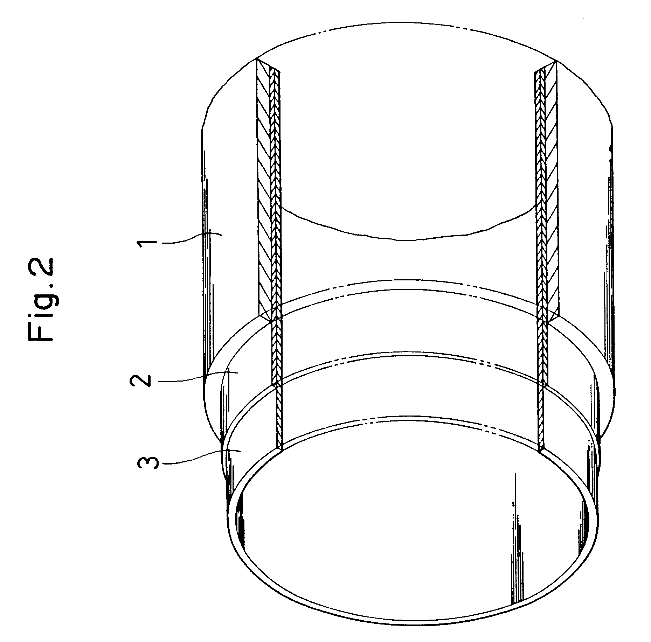

This embodiment is composed of three layers as shown in Fig. 2. The tube is formed by laminating a PO layer 3, an MX nylon layer 2, and a polyamide resin layer 1 (hereinafter referred to as nylon 12 layer 1) in sequence from inside to outside. The PO layer 3, the MX nylon layer 2 and the nylon 12 layer 1 are respectively 0.1mm, 0.1mm and 0.8mm in thickness. The laminated tube as a whole is 8mm in outside diameter and 6mm in inside diameter, i.e. the same as the foregoing embodiment.

### Embodiment 3

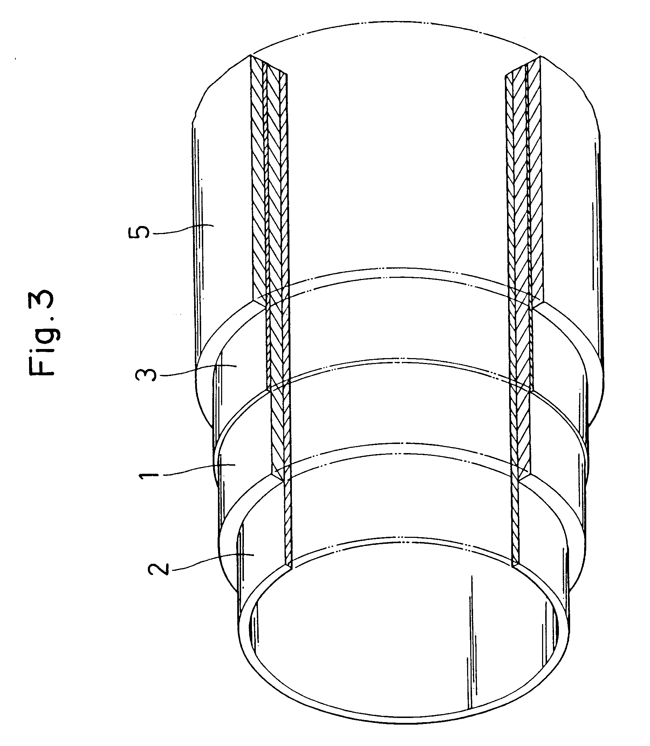

This embodiment is composed of four layers as shown in Fig. 3. The tube is formed by laminating an MX nylon layer 2, a nylon 12 layer 1, a PO layer 3, and a superhigh molecular polyethylene layer 5 in sequence from inside to outside. The thicknesses of the respective layers are 0.1mm, 0.35mm, 0.05mm, and 0.5mm. The laminated tube as a whole is 8mm in outside diameter and 6mm in inside diameter, as before.

### Embodiment 4

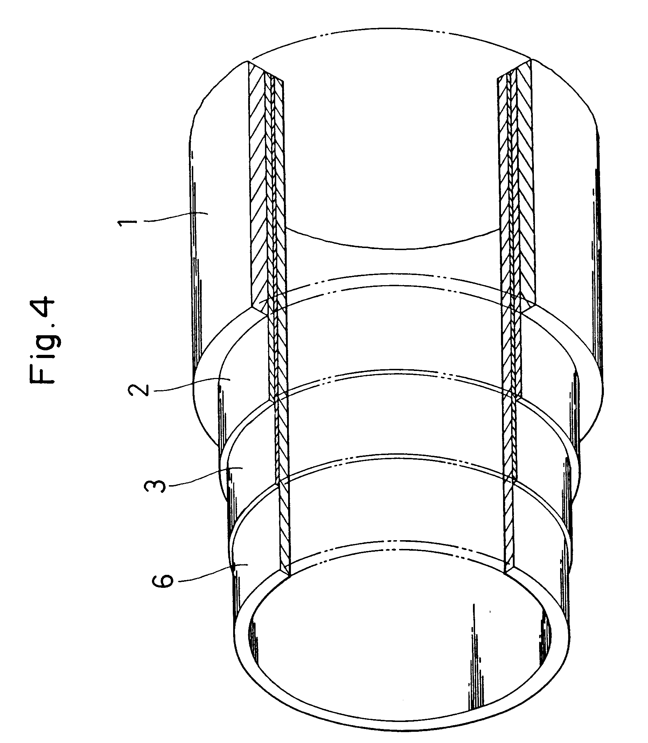

This embodiment is also composed of four layers as shown in Fig. 4. It is formed by laminating a nylon layer 6, containing elastomer, a PO layer 3, an MX nylon layer 2, and a nylon 12 layer 1 in sequence from inside to outside. The thicknesses of the respective layers are 0.35mm, 0.05mm, 0.1mm, and 0.5mm. The laminated tube as a whole is 8mm in outside diameter and 6mm inside diameter, as before.

### Embodiment 5

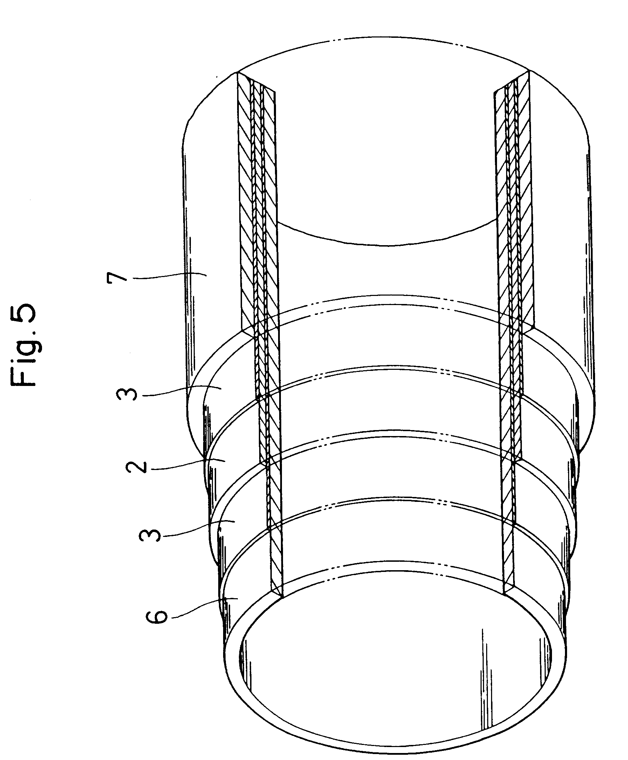

This embodiment is composed of five layers as shown in Fig. 5. The composition is formed by laminating a nylon 6 layer 6, containing elastomer, a PO layer 3, an MX nylon layer 2, a PO layer 3, and a nylon 12 layer 7, also containing elastomer, in sequence from inside to outside. The thicknesses of the respective layers are 0.35mm, 0.05mm, 0.1mm, 0.05mm and 0.45mm. The laminated tube as a whole is 8mm in outside diameter and 6mm in inside diameter.

Any known common method of extrusion forming, e.g. extrusion coating and other methods, may be employed as a method of forming the fuel transfer tubes of embodiments 1 to 5. In particular, a conventional extrusion forming method using two, three or four extruders and a tube die for multiple layers may produce endless tubes of this sort efficiently.

Each resin may be formed in any desired shape in a temperature range not lower than the softening point and not higher than the decomposition point. Generally a range between about 150 and 320°C is chosen, and in particular that of 190 to 280°C is preferable.

The principal resins mentioned above are defined below. The resulting tubes were tested by the same methods as mentioned above in relation to the prior art and the results are given in Table 3.

### Definitions of principal resins

### Polyamide resin containing metaxylene group

In the present invention, the polyamide resin containing metaxylene group is a polymer containing, in the molecular chain of the constituent units, at least 70 mol% of metaxylene diamine, or mixed xylene diamine containing metaxylene diamine and paraxylene diamine (not more than 30% thereof), and α, ω-aliphatic dicarboxylic acid with 4 to 10 carbon atoms.

Such polymers include, for example, homopolymers such as polymetaxylene adipamide, polymetaxylene sebacamide, and polymetaxylene seperamide, copolymers such as metaxylene/paraxylene adipamide copolymer, metaxylene/paraxylene pimeramide copolymer, and metaxylene/paraxylene azelamide copolymer, and further copolymers having the components of these homopolymers or copolymers copolymerized with aliphatic diamine such as hexamethylene diamine, alicyclic diamine such as piperazine, aromatic diamine such as para-bis-(2-aminoethyl) benzene, aromatic dicarboxylic acid such as terephthalic acid, lactams such as ε-caprolactam, ω-aminocarboxylic acid such as γ-aminoheptanic acid, and aromatic aminocarboxylic acid such as para-aminomethyl benzoic acid.

The content of the paraxylene diamine mentioned above is not more than 30% of the total xylene diamine, and the content of the constituent units composed of xylene diamine and aliphatic dicarboxylic acid is at least 70 mol% or more in the molecular chain.

By itself, the polyamide resin containing metaxylene group is, by nature, brittle in an amorphous state, and the relative viscosity is generally required to be 1.5 or more, or preferably 2.0 to 4.0.

These polymers may be combined with homopolymers or copolymers, for example, nylon 4.6, nylon 6, nylon 6.6, nylon 6.10, nylon 6.12, nylon 11, nylon 12, and nylon 12.12.

To enhance the flexibility, the polyamide resin containing metaxylene group may be blended with soft rubber materials, such as styrene, butadiene rubber, chloroprene rubber, butyl rubber, nitrile rubber, ethylene propylene rubber, acrylic rubber, urethane rubber, ethylene chlorosulfonate chloroprene rubber, and fluororubber, or thermoplastic elastomers, such as polyester elastomer, polyamide elastomer, olefin elastomer, vinyl chloride elastomer, urethane elastomer, and styrene elastomer. The content of the blended materials is 0 to 97 wt.%, or preferably 20 to 85 wt.%. A relatively soft thermoplastic resin with the elastic modulus of 12,000kg/cm² or less may be also blended therein.

Various additives may be blended as required in a range not spoiling the present invention. Examples of additives include colouring matter, ultraviolet absorbent, antistatic agent, antioxidant, lubricant, nucleic agent, plasticizer, flame retardant, shock resisting agent, and inorganic filler.

### Polyamide resin

The polyamide resin in the present invention includes a linear polyamide of high molecular content. This type of polyamide may be homopolyamide, copolyamide, or a blend thereof.

Such a polyamide may include homopolyamide, copolyamide, or a blend thereof having an amide repeating unit of

-CO-R¹-NH- (1)

or

-CO-R²-CONH-R³-NH (2)

(R¹, R², and R³ denote straight-chain alkylene groups). Considering the gas barrier property against oxygen or carbon dioxide, the number of amide groups per 100 carbon atoms in the polyamide resin used in the invention is desired to be 3 to 30, and especially homopolyamide, copolyamide or the blend thereof in a range of 4 to 25 is preferable. Practical examples of suitable homopolyamide include polycapramide (nylon 6), poly- ω -aminohepetanic acid (nylon 7), poly-ω-aminononanic acid (nylon 9), polyundecanamide (nylon 11), polylaurynlactam (nylon 12), polyethylene diamine azipamide (nylon 2.6), polytetramethylene azipamide (nylon 4.6), polyhexamethylene azipamide (nylon 6.6), polyhexamethylene sebacamide (nylon 6.10), polyhexamethylene dodecamide (nylon 6.12), polyoctamethylene azipamide (nylon 8.6), polydecamethylene azipamide (nylon 10.6), polydecamethylene sebacamide (nylon 10.10), and polydedecamethylene dodecamide (nylon 12.12). Suitable copolyamides to be used in the present invention include, for example, caprolactam/laurynlactam copolymer, caprolactam/hexamethylene diammonium azipate copolymer, laurynlactam/hexamethylene diammonium azipate copolymer, hexamethylene diammonium azipate/hexamethylene diammonium sepacate copolymer, ethylene diammonium azipate/hexamethylene diammonium azipate copolymer, and caprolactam/hexamethylene diammonium azipate/hexamethylene diammonium sepacate copolymer.

To endow these polyamides with flexibility, plasticizers such as aromatic sulfonamide, P-hydroxy benzoic acid and esters, elastomer components of low elasticity, and lactams may be blended therein.

Elastomer components may be selected from ionomer resin, denatured polyolefin resin, polyether amide resin, polyester amide resin, polyether ester amide resin, polyether ester resin, denatured styrene thermoplastic elastomer, denatured acrylic rubber, denatured ethylene propylene rubber, and others compatible with polyamide resin with the elastic modulus of 3,000 kgf/cm² or less, which may be used either alone or in combination.

### Polyolefin resin

The polyolefin resin used in the present invention is generally a hydrocarbon resin. The following are examples thereof:
Olefin polymers such as polyethylene, polybutadiene, polyisoprene, polyisobutylene, polybutylene, polymethylpentene, polypropylene, polyterpen resin, polybutene and ethylene-butadiene copolymer;
α-olefin copolymers obtained by copolymerizing two or three or more kinds of ethylene, propylene, 1-butene, 1-hexene, 4-methyl-pentene, 1-decen, 1-hexadecen and 1-icocen;
acid denatured olefin polymer or acid denatured α-olefin copolymer graft copolymerized with unsaturated monocarboxylic acid such as acrylic acid, methacrylic acid and α-methylacrylic acid, unsaturated dicarboxylic acid such as maleic acid, fumaric acid, itaconic acid, citraconic acid, tetrahydrophthalic acid, methyl tetrahydrophthalic acid, nadic acid and methyl nadic acid, or derivatives of the above unsaturated mono- or dicarboxylic acid such as acid halide, amide, imide, anhydride and ester, and;
copolymers of these acid denatured α-olefin copolymers with diene components.

Out of the above-listed polyolefin resins, either one member alone or a mixture of two or more members may be used.

The materials are not limited to thermoplastic resins, however, and crosslinked polyethylene and other crosslinked polyolefin resins may also be employed. One suitable example is a water crosslinked polyolefin, which is a polyolefin obtained by copolymerizing or grafting a compound containing a silyl group possessing hydrolyzable organic group, including a polyolefin capable of crosslinking by the action of water in the presence of silanol condensation catalyst.

### Test Results

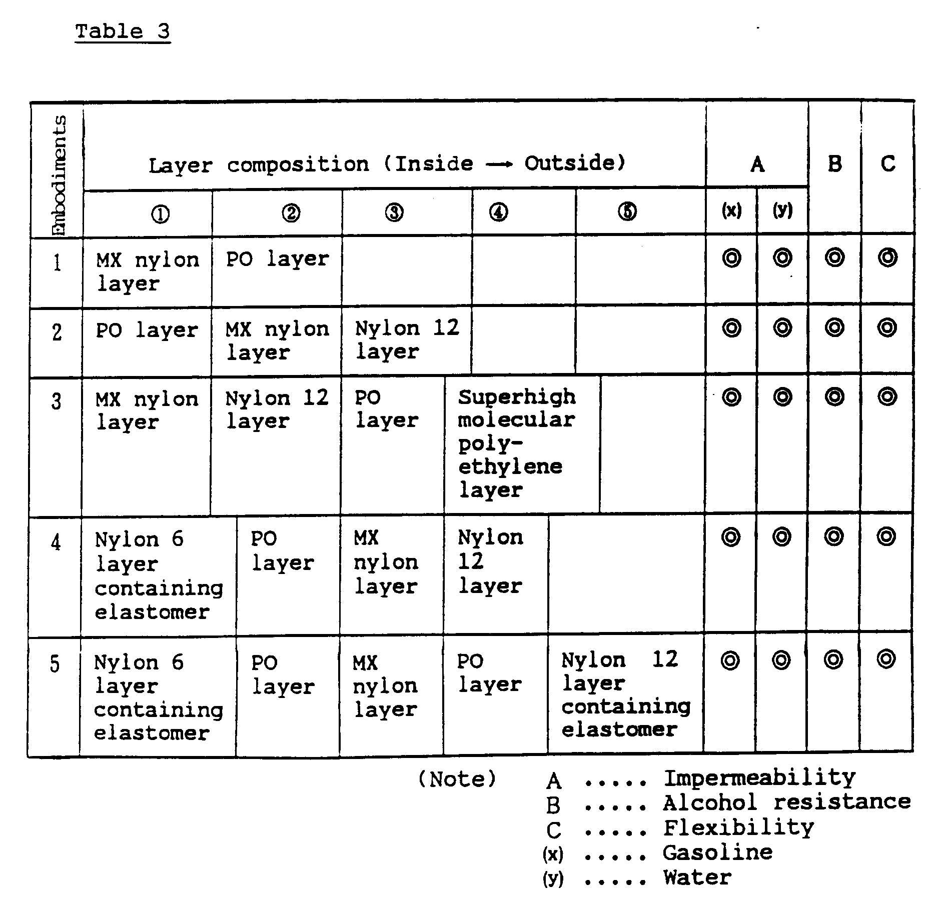

The symbol Ⓞ used in Table 3 denotes the same as in Table 2.

The present invention, as clearly shown in Table 3, provides flexible fuel transfer tubes capable of being used reliably for transferring alcohol, gasoline, or a mixture thereof.

## Claims

1. A liquid transfer tube comprising a layer (2) of polyamide resin containing metaxylene groups, said layer being 0.3mm or less in thickness, and a layer (3) of polyolefin resin.

2. A liquid tube according to claim 1 and formed by simultaneous extrusion of the respective layers.

3. A liquid transfer tube according to claim 1 or 2 comprising only of said layer (2) of polyamide resin containing metaxylene groups and said layer (3) of polyolefin resin, the latter being outside the former.

4. A liquid transfer tube according to claim 1 or 2 further including a conventional layer (1) of polyamide resin.

5. A liquid transfer tube according to claim 4 further including a layer (5) of superhigh molecular polyethylene.

6. A liquid transfer tube according to claim 4 further including a layer (6, 7) of elastomer-containing nylon.

7. A liquid transfer tube according to any preceding claim wherein the polyamide resin containing metaxylene groups is a polymer containing, in the molecular chain of constituent units, at least 70 mol% of metaxylene diamine, or of mixed xylene diamine containing metaxylene diamine and paraxylene diamine, and α, ω-aliphatic dicarboxylic acid with 4 to 10 carbon atoms.

8. A liquid transfer tube according to any preceding claim having a total wall thickness of between 1.5 and 2.5mm.

9. A liquid transfer tube according to any preceding claim having an external diameter of no more than 8mm.

## Patentansprüche

1. Rohr zum Befördern einer Flüssigkeit, umfassend eine Schicht (2) aus Polyamidharz, das m-Xylolgruppen enthält, wobei die Schicht eine Dicke von 0,3 mm oder weniger aufweist, und eine Schicht (3) aus Polyolefinharz.

2. Rohr zum Befördern einer Flüssigkeit nach Anspruch 1, gebildet durch die gleichzeitige Extrusion der jeweiligen Schichten.

3. Rohr zum Befördern einer Flüssigkeit nach Anspruch 1 oder 2, umfassend nur die Schicht (2) aus Polyamidharz, das m-Xylolgruppen enthält, und die Schicht (3) aus Polyolefinharz, wobei die letztere außen von der ersteren angeordnet ist.

4. Rohr zum Befördern einer Flüssigkeit nach Anspruch 1 oder 2, weiters umfassend eine herkömmliche Schicht (1) aus Polyamidharz.

5. Rohr zum Befördern einer Flüssigkeit nach Anspruch 4, weiters umfassend eine Schicht (5) aus superhochmolekularem Polyethylen.

6. Rohr zum Befördern einer Flüssigkeit nach Anspruch 4, weiters umfassend eine Schicht (6, 7) aus elastomerhältigem Nylon.

7. Rohr zum Befördern einer Flüssigkeit nach einem der vorhergehenden Ansprüche, worin das Polyamidharz, das m-Xylolgruppen enthält, ein Polymer ist, das in der Molekülkette der konstituierenden Einheiten zumindest 70 Mol-% m-Xyloldiamin oder gemischtes Xyloldiamin, das m-Xyloldiamin und p-Xyloldiamin enthält, sowie eine α-, ω-aliphatische Dikarbonsäure mit 4 bis 10 C-Atomen enthält.

8. Rohr zum Befördern einer Flüssigkeit nach einem der vorhergehenden Ansprüche mit einer gesamten Wanddicke zwischen 1,5 und 2,5 mm.

9. Rohr zum Befördern einer Flüssigkeit nach einem der vorhergehenden Ansprüche mit einem Außendurchmesser von nicht mehr als 8 mm.

## Revendications

1. Tube de transfert de liquide comprenant une couche (2) d'une résine de polyamide contenant des groupes métaxylène, ladite couche ayant 0,3 mm ou moins d'épaisseur, et une couche (3) de résine de polyoléfine.

2. Tube de liquide selon la revendication 1 et formé par extrusion simultanée des couches respectives.

3. Tube de transfert de liquide selon la revendication 1 ou 2, comprenant seulement ladite couche (2) de résine de polyamide et contenant des groupes métaxylène et ladite couche (3) de résine de polyoléfine, cette dernière étant à l'extérieur de la première.

4. Tube de transfert de liquide selon la revendication 1 ou 2, incluant de plus une couche (1) conventionnelle de résine de polyamide.

5. Tube de transfert de liquide selon la revendication 4, incluant de plus une couche (5) de polyéthylène moléculaire superélevé.

6. Tube de transfert de liquide selon la revendication 4, incluant de plus une couche (6, 7) de nylon contenant un élastomère.

7. Tube de transfert de liquide selon l'une quelconque des revendications précédentes, dans lequel la résine de polyamide contenant des groupes métaxylène est un polymère contenant, dans la chaîne moléculaire des unités de constitution, au moins 70% en moles de métaxylène diamine, ou d'une xylène diamine mixte contenant une métaxylène diamine et une paraxylène diamine, et un acide α,ω-aliphatique dicarboxylique avec 4 à 10 atomes de carbone.

8. Tube de transfert de liquide selon l'une quelconque des revendications précédentes ayant une épaisseur de paroi totale d'entre 1,5 et 2,5 mm.

9. Tube de transfert de liquide selon l'une quelconque des revendications précédentes ayant un diamètre externe non supérieur à 8 mm.
